# EUROPEAN PATENT SPECIFICATION

(11) **EP 0 547 119 B1**
(45) Date of publication and mention of the grant of the patent: **31.07.1996**
(21) Application number: 91916156.2
(22) Date of filing: 20.08.1991
(51) Int. Cl.: A23F 5/20, A23F 5/02

(54) **ACID TREATMENT FOR DECAFFEINATION OF COFFEE**
EINTKAFFEINIERUNGSVERFAHREN VON KAFFEE DURCH EINE SÄUREBEHANDLUNG
TRAITEMENT ACIDE DE DECAFEINATION DU CAFE

(30) Priority: 23.08.1990 US 571749
(43) Date of publication of application: 23.06.1993
(73) Proprietor: LIQUID CARBONIC CORPORATION, Chicago, IL 60603 (US)
(72) Inventor: KAZLAS, Peter, T., Allentown, PA 18104 (US); NOVAK, Richard, A., Lansdale, PA 19446 (US); ROBEY, Raymond, J., Macungie, PA 18062 (US)
(74) Representative: Baverstock, Michael George Douglas
(86) International application number: US9105951
(87) International publication number: WO9203061

(56) References cited:
- EP-A- 0 114 426
- EP-A- 0 282 762
- DE-A- 1 492 744
- US-A- 4 911 941
- M. SIVETZ and N. DESROSIER, Coffee Technology, 1979, Avi Publishing Company, Inc., Westport, Connecticut, pages 582-584, 602.

## Description

### Background of the Invention

This invention relates to decaffeination of green coffee beans. More particularly, this invention relates to treatment of green coffee beans prior to or simultaneously with decaffeination. Still more particularly, this invention relates to treatment of green coffee beans by contacting them with an aqueous organic acid solution in connection with supercritical extraction of caffeine.

Many processes are known for decaffeination of coffee. One particularly preferred process is supercritical extraction of caffeine, typically performed using supercritical carbon dioxide, perhaps with cosolvents such as water or so-called enhancers. Such processes are disclosed, for instance, in U.S. Patent Nos. 4,820,537 and 4,260,639. Such processes practiced to the present have suffered in their ability to produce coffee comparable in flavor and aroma to non-decaffeinated coffee.

While supercritical carbon dioxide is an effective decaffeination medium, its solvent action is not specific to caffeine or caffeine precursors. During supercritical decaffeination of green coffee beans, numerous other components are removed including but not limited to waxes, oils, and color bodies. Applicants have discovered that water soluble components including acidic species are also removed from the green coffee beans. It is known that the pH of a coffee beverage contributes to perceived flavor, and that the range of pH for acceptable palatability is from about 4.95 to about 5.15. Others have attempted to control the pH of final coffee product, i.e., instant or roast and ground coffee, by adding acidic or alkaline substances to the final coffee product to account for unacceptable pH caused by such factors as the botany of the coffee beans, the altitude at which they are grown, the processing method applied to the coffee fruit, the age of the beans when processed, and the degree of roasting. See, e.g., Sivetz, *How Acidity Affects Coffee Flavor*, Food Technology, Vol. 25, No. 5, 1971, pages 70-77. However, there appears to be no recognition in the art that supercritical decaffeination adversely affects acidity, nor does there appear to be any method disclosed for controlling the acidity of coffee products other than final coffee products.

US-A-4 911 941 describes a method of continuously decaffeinating moistured green coffee beans with supercritical carbon dioxide in which an acidic substantially caffeine-free permeate comprising acids derived from the green coffee beans is directed back to the extraction system as wash water or to moisturise the green coffee beans prior to extraction or both. However, this prior patent specification does not suggest the augmentation of the acidity originally present in the green coffee by the addition of organic acids which are normally present in coffee.

EP-A-282 762 describes a method of producing roasted coffee wherein green coffee beans are treated with an acid, for example an aqueous solution of citric acid prior to drying and roasting. However there is no suggestion in this prior patent specification to use this method in a process for producing decaffeinated coffee using supercritical carbon dioxide.

EP-A-114 426 describes a counter-current extraction process for accelerated decaffeination of coffee beans in which a combined steaming and prewetting method of green coffee beans is employed. There is no suggestion however of pretreating the coffee beans with acid prior to the extraction step.

### Summary of the Invention

It is therefore an object of the invention to provide a method of decaffeinating green coffee beans without adversely affecting their acidity or the flavour of coffee beverages produced from them. It is a further object of the invention to provide such a method useful with supercritical decaffeination, in particular with caffeine extraction using supercritical carbon dioxide. In accordance with the invention, green coffee beans are subjected to a treatment by contacting them with an acidic fluid, preferably an aqueous citric acid solution, prior to decaffeination. These and other objects and features of the invention will become apparent upon review of the following specification and appended claims.

### Detailed Descriptions of the Preferred Embodiment

The process of the invention comprises a method of treating green coffee beans comprising contacting green coffee beans with an aqueous solution of organic acids which are normally present in coffee beans and thereafter decaffeinating said green coffee beans by extraction with supercritical carbon dioxide characterised by, prior to decaffeination, contacting green coffee beans with steam and an acid selected from tartaric acid, citric acid and malic acid, maintaining said green coffee beans in contact with said aqueous solution until a predetermined degree of acidification of said green coffee beans has occurred by absorption of said aqueous solution by said green coffee beans, said predetermined degree of acidification being that degree obtained by contacting said green coffee beans with an aqueous citric acid solution in a weight ratio of green coffee beans to citric acid solution of 3/1 and allowing said citric acid solution to be fully absorbed by said green coffee beans, and wherein said citric acid solution has a citric acid concentration of between 0.5% and 3.5% by weight.

Because the citric acid is highly dissociated in aqueous solution, and because it may be easily and inexpensively obtained in food grades, it is particularly preferred.

The acid treatment is carried out using conditions of time, temperature, and acid concentration to achieve the desired acidification of the green coffee beans in view of their natural characteristics and the further processing methods to be employed.

Acid treatment of green coffee beans is carried out as a pretreatment step prior to decaffeination, where it may be easily controlled and where it is combined with a moisturizing step typically performed prior to decaffeination.

Since green coffee beans are frequently moisturized by contacting them with water or steam prior to supercritical decaffeination, typically to a moisture content above 20% and usually about 25% to about 50%, the acidifying pretreatment step of the invention is desirably performed during such moisturizing. Accordingly, the pretreatment step is desirably carried out so that when the desired moisture content has been achieved, the desired acidification of the green coffee beans has also been achieved.

After the acidification step, the acidified moist green coffee beans are subjected to decaffeination, by supercritical extraction using supercritical carbon dioxide, since carbon dioxide is relatively inexpensive, effective, and does not leave any toxic residues in the decaffeinated beans. Such supercritical extraction may be accomplished using conventional extraction and separation vessels.

Both the acid treatment step and the supercritical extraction step of the invention may be performed in a batch, continuous, or pseudo-continuous process.

### Example

2.3 Kg (5 pounds) of green coffee beans, having a caffeine content of about 1.12% by weight, were steamed for about 15 minutes and loaded into a wetting device which recirculated 1.5 Kg (3.4 pounds) of a 2.0% by weight citric acid/water solution. The wetting device was designed so that the citric acid solution was fed to a spray head and sprayed over the beans, percolated through them, collected at the bottom, and then pumped back to the spray head. This was performed at about 60°C. - 80°C. until the solution had been entirely absorbed into the beans, approximately 45 minutes. The resulting beans had a moisture content of about 30.6%.

The pretreated green coffee beans were loaded into a basket which was placed inside a supercritical extraction vessel containing 2.3 Kg (5 pounds) of water in the bottom of the extractor. The beans were suspended about 12 inches above the water level. The extractor was sealed and purged for 5 minutes with carbon dioxide to eliminate any air. The extractor and its associated separator were then brought up to process conditions, namely and extractor temperature of 90°C., an extractor pressure of 280 bar, a separator temperature of 30°C. - 40°C., and a separator pressure of 70 - 80 bar. The extractor charge was subjected to supercritical carbon dioxide with a flow rate of 64 Kg (141 pounds) of carbon dioxide per hour for an 8 hour period. During the extraction process, a cosolvent pump was operated at a rate to maintain the water content of the system within 0.23 Kg (½ pound) of its initial value. At the end of the 8 hour supercritical extraction run, the system was slowly depressurized through the separator. The beans were removed from the extracted and dried to a moisture content of about 7% - 10%.

Beans treated with the process of the example were analyzed and tested by high performance liquid chromatographic methods which revealed a final caffeine content of 0.043% by weight, which corresponds to a decaffeination level of 96.2%.

Coffee produced by the method of this example and coffee produced by substantially the same method but without acidic treatment were subjected to evaluation and flavor analysis according to standard techniques. These include preliminary examination of the green coffee beans for color. The beans are then roasted and ground, and the product again evaluated for color. The roast and ground coffee is then brewed by adding boiling water and allowing it to steep. Brewed coffee is then evaluated for flavor, color, and aroma by three trained and qualified tasters according to a standard scale containing 13 gradations, including A (best), B9-B5, C8-C4, D3-D2, and F. The scores provided by the individual tasters are averaged, to produced averaged scores.

Coffees produced according to the method of this example were scored as C8 and B-5 (acceptable) in several tests. Coffees produced substantially to the method of the example, but without acidic treatment, were scored C-4 (bad).

Any acidification will be of some benefit with green coffee beans which produce excessively alkaline coffee upon decaffeination and further processing to coffee beverage. However, applicants' tests suggest that with typical coffees of the arabica variety using citric acid pretreatment in the manner of the above example, acid concentrations in the range of about 0.05% to about 3.5% by weight are preferred, that citric acid concentrations in the range of about 1.0% to about 3.0% by weight are more preferred, and that a citric acid concentration of about 1.5% to about 2.0% is most preferred.

The acid pretreatment process is conveniently carried out at room temperature, however, it will be understood that other temperatures, desirably between about room temperature and about 80°C., may be used. It will also be understood that the desirable degree of acidification will depend on the nature of the green coffee beans to be decaffeinated as well as on the decaffeination process and the process used to convert the acidified decaffeinated coffee beans to final coffee product.

The degree of acidification may be controlled by the selection of the particular acid used, and the time during which and temperature at which the beans are contacted by the acid solution.

In the nature of the example above, applicants have found it preferable to contact the green coffee beans with an aqueous organic acid solution of sufficient solution to beans ratio and sufficient acid concentration that when the solution is fully absorbed into the beans, the beans have reached the desired moisture content and desired degree of acidification. The desired moisture content by weight is preferably above about 20%, more preferably between about 25% and about 50%, and most preferably between about 30% and about 35%. With the preferred acid solution, aqueous citric acid solution, and with pretreatment of the beans to achieve a moisture content of about 30% to 35%, the solution is preferably between about 0.5% and about 3.5%, and more preferably between about 1.0% and 3.0%, most preferably about 1.5% and about 2.0% citric acid by weight. If other acids are used, their concentration in the solution may be adjusted so that the hydrogen ion concentration in the pretreatment solution is equivalent to that of the citric acid solutions specified above, whereby solutions which are equivalent to their acidification of the beans may be obtained.

While control of the pretreatment process is easiest when a batch process is used with fixed initial quantities of solution and beans and the treatment is carried out until the solution is fully absorbed, or in a batch or continuous process wherein quantities of solution in excess of the amount which may be absorbed into the beans are used and the process is carried out until the acid concentration in the beans is the same as the acid concentration in the solution, it will be understood that other methods may be used. For instance, acid solution of higher hydrogen ion concentration than the citric acid solutions specified above may be used, and the pretreatment process conducted for a time shorter than that necessary to reach equilibrium. Such methods may, however, require other steps to achieve desired moisture content.

As indicated above, green coffee beans are often steamed prior to decaffeination. In addition to moisturizing the beans, the steaming step swells beans to a greater extent than moisturizing by soaking, and thus makes subsequent caffeine extraction easier. Applicant has found it advantageous to both steam and soak the beans, preferably simultaneously. Accordingly, in a preferred embodiment of the invention, the beans are subjected to pretreatment comprising simultaneously subjecting them to a flow of steam and contacting them with an acidic fluid. This may be accomplished by loading a vessel with a change of beans, supplying steam to an inlet near the bottom of the vessel, withdrawing steam from an outlet near the top of the vessel, and spraying acidic fluid such as aqueous citric acid solution over the beans from a spray head near the top of the vessel. Acidic fluid collecting in the bottom of the vessel after passing over the beans may be recirculated to the spray head.

As indicated, decaffeination of the pretreated acidified green coffee beans is preferably accomplished by a supercritical extraction step using supercritical carbon dioxide, most preferably using moist carbon dioxide, i.e., using water as a cosolvent. Applicants believe that the extraction step is preferably carried out at a pressure in excess of 200 bar, more preferably at a pressure in excess of about 240 bar, and most preferably at a pressure between about 250 bar and about 310 bar. Applicants further believe that the extraction step is preferably carried out at a temperature above the critical temperature, more preferably at a temperature between about 60°C. and about 120°C., and most preferably at a temperature between about 70°C. and about 110°C. The extraction is preferably carried out with a solvent/feed ratio of between about 50/1 and 300/1, and most preferably between about 75/1 and about 275/1. Applicants believe, however, that the specified extraction parameters are desirable primarily because of ease and effectiveness of the extraction step itself, rather than because of a relationship with the acidifying pretreatment step.

In a particularly preferred decaffeination process, the green coffee beans are subjected to moist supercritical carbon dioxide as described above, wherein the supercritical fluid is passed through an acidic fluid prior to contacting the beans. For instance, a volume of acidic fluid such as aqueous citric acid may be maintained in the bottom of the extraction vessel. Supercritical carbon dioxide may be introduced into the bottom of the vessel, whereupon it bubbles through the citric acid solution, entraining citric acid as well as water. This process tends to maintain the citric acid balance, by reducing dissolving of the citric acid which was introduced into the beans during pretreatment.

In view of the foregoing, it will be understood that the acidification of green coffee beans may be combined with the decaffeination step. Thus, green coffee beans may be introduced into an extraction vessel and decaffeination in the presence of an acidic fluid. For instance, pretreatment of green coffee beans may be dispensed with and they may, after any desired steaming step or the like, be introduced into a supercritical extraction vessel having a volume of acidic fluid such as aqueous citric acid in the bottom. Supercritical carbon dioxide may be introduced at the bottom of the vessel, where it will bubble through an entrain the acidic fluid. The green coffee beans will then become acidified by absorbing acidic fluid while caffeine is extracted by the supercritical fluid.

Decaffeination of coffee is desirably preferred until at least about 90%, and more preferably at least about 97%, by weight of the caffeine content is removed. Since green coffee beans typically contain from about 0.6% to about 3.0% caffeine by weight, the decaffeination process in accordance with the present invention is preferably carried out until the caffeine content of the beans is less than about 0.3% by weight, and more preferably until the caffeine content is less than about 0.1% by weight.

Supercritical carbon dioxide is used in the process for decaffeination in the present invention, this being, to the applicants' knowledge, the most selective, i.e. most effective in removing caffeine but not other compounds from the green coffee beans.

It is therefore seen that the process of the invention is useful in connection with green coffee beans and decaffeination processes which would otherwise produce decaffeinated beans which then used to make coffee beverage would result in a too-alkaline beverage.

## Claims

1. A method of treating green coffee beans comprising contacting green coffee beans with an aqueous solution of organic acids which are normally present in coffee beans and thereafter decaffeinating said green coffee beans by extraction with supercritical carbon dioxide characterized by, prior to decaffeination, contacting green coffee beans with steam and an acid selected from tartaric acid, citric acid and malic acid, maintaining said green coffee beans in contact with said aqueous solution until a predetermined degree of acidification of said green coffee beans has occurred by absorption of said aqueous solution by said green coffee beans, said predetermined degree of acidification being that degree obtained by contacting said green coffee beans with an aqueous citric acid solution in a weight ratio of green coffee beans to citric acid solution of 3/1 and allowing said citric acid solution to be fully absorbed by said green coffee beans, and wherein said citric acid solution has a citric acid concentration of between 0.5% and 3.5% by weight.

2. A method as claimed in claim 1, wherein said organic acid is citric acid.

3. A method as claimed in claim 1 or claim 2 wherein said predetermined degree of acidification is that obtained when said citric acid solution has a citric acid concentration of between 1.0% and 3.0% by weight.

4. A method as claimed in claim 3, wherein said predetermined degree of acidification is that obtained when said citric acid solution has a citric acid concentration of between 1.5% and 2.0% by weight.

5. A method as claimed in any one of the preceding claims wherein said green coffee beans are maintained in contact with said aqueous acid solution until the moisture content of said green coffee beans is above 20% by weight.

6. A method as claimed in claim 5 wherein said green coffee beans are maintained in contact with said aqueous acid solution until the moisture content of said green coffee beans is between 25% and 50% by weight.

7. A method as claimed in claim 6 wherein said green coffee beans are maintained in contact with said aqueous solution until the moisture content of said green coffee beans is between 30% and 35% by weight.

8. A method as claimed in any one of the preceding claims wherein said maintaining step comprises circulating said aqueous acid solution over said green coffee beans until said aqueous acid solution is substantially fully absorbed by said green coffee beans.

9. A method as claimed in any one of claims 1 to 7 wherein said maintaining step comprises circulating said aqueous acid solution over said green coffee beans until the acid concentration in said beans is substantially the same as that in said solution.

10. A method as claimed in any one of the preceding claims wherein said contacting and maintaining steps are performed at between room temperature and 80°C.

11. A method as claimed in any one of the preceding claims wherein said green coffee beans are further processed into final coffee product, and said final coffee product is adapted to produce a coffee beverage having an acceptable acidic character to its flavor.

12. A method as claimed in any one of the preceding claims wherein said green coffee beans are thereafter subjected to a roasting step.

13. A method as claimed in claim 12, wherein said roast coffee beans are thereafter processed into final coffee product.

14. A method as claimed in any one of the preceding claims wherein said steps of contacting with said aqueous solution and contacting with steam are performed simultaneously.

15. A method as claimed in claim 14, wherein said contacting steps are performed by placing said green coffee beans in a vessel, introducing steam into said vessel through an inlet adjacent to the bottom of said vessel, and contacting said green coffee beans with a spray of said aqueous acid solution from a spray head adjacent to the top of said vessel.

16. A method as claimed in any one of the preceding claims wherein said supercritical carbon dioxide comprises a mixture of carbon dioxide and water.

17. A method as claimed in any one of the preceding claims wherein said supercritical carbon dioxide has a pressure in excess of 200 bar.

18. A method as claimed in claim 17, wherein said supercritical carbon dioxide has a pressure in excess of 240 bar.

19. A method as claimed in claim 18, wherein said supercritical carbon dioxide has a pressure between 250 bar and 310 bar.

20. A method as claimed in any one of the preceding claims wherein said supercritical carbon dioxide has a temperature between 60°C and 120°C.

21. A method as claimed in claim 20, wherein said supercritical carbon dioxide has a temperature between 70°C and 110°C.

22. A method as claimed in any one of the preceding claims wherein said extracting step is performed with a weight ratio of supercritical carbon dioxide to green coffee beans of between 50/1 and 300/1.

23. A method as claimed in claim 22, wherein said weight ratio is between 75/1 and 275/1.

## Patentansprüche

1. Verfahren zur Behandlung grüner Kaffeebohnen, umfassend Inkontaktbringen von grünen Kaffeebohnen mit einer wäßrigen Lösung von organischen Säuren, welche normalerweise in Kaffeebohnen vorliegen und danach Entkoffeinieren der grünen Kaffeebohnen durch Extraktion mit superkritischem Kohlendioxid, **gekennzeichnet durch**, Inkontaktbringen von grünen Kaffeebohnen, vor der Entkoffeinierung, mit Dampf und einer Säure ausgewählt aus Weinsäure, Zitronensäure und Äpfelsäure, Halten der grünen Kaffeebohnen in Kontakt mit der wäßrigen Lösung, bis ein vorbestimmter Grad an Ansäuerung der grünen Kaffeebohnen durch Absorption der wäßrigen Lösung durch die grünen Kaffeebohnen eingetreten ist, wobei der vorbestimmte Grad an Ansäuerung der Grad ist, der durch Inkontaktbringen der grünen Kaffeebohnen mit einer wäßrigen Zitronensäurelösung in einem Gewichtsverhältnis von grünen Kaffeebohnen zu Zitronensäurelösung von 3/1 und vollständiges Absorbierenlassen der Zitronensäurelösung durch die grünen Kaffeebohnen erhalten wird, und worin die Zitronensäurelösung eine Zitronensäurekonzentration zwischen 0,5 Gew.-% und 3,5 Gew.-% aufweist.

2. Verfahren nach Anspruch 1, worin die organische Säure Zitronensäure ist.

3. Verfahren nach Anspruch 1 oder 2, worin der vorbestimmte Grad an Ansäuerung derjenige ist, der erhalten wird, wenn die Zitronensäurelösung eine Zitronensäurekonzentration zwischen 1,0 Gew.-% und 3,0 Gew.-% aufweist.

4. Verfahren nach Anspruch 3, worin der vorbestimmte Grad an Ansäuerung derjenige ist, der erhalten wird, wenn die Zitronensäurelösung eine Zitronensäurekonzentration zwischen 1,5 Gew.-% und 2,0 Gew.-% aufweist.

5. Verfahren nach einem der vorhergehenden Ansprüche, worin die grünen Kaffeebohnen mit der wäßrigen Säurelösung in Kontakt gehalten werden, bis der Feuchtigkeitsgehalt der grünen Kaffeebohnen mehr als 20 Gew.-% beträgt.

6. Verfahren nach Anspruch 5, worin die grünen Kaffeebohnen mit der wäßrigen Säurelösung in Kontakt gehalten werden, bis der Feuchtigkeitsgehalt der grünen Kaffebohnen zwischen 25 Gew.-% und 50 Gew.-% beträgt.

7. Verfahren nach Anspruch 6, worin die grünen Kaffeebohnen in Kontakt mit der wäßrigen Lösung gehalten werden, bis der Feuchtigkeitsgehalt der grünen Kaffeebohnen zwischen 30 Gew.-% und 35 Gew.-% beträgt.

8. Verfahren nach einem der vorhergehenden Ansprüche, worin der Halteschritt das Zirkulieren der wäßrigen Säurelösung über die grünen Kaffeebohnen umfaßt, bis die wäßrige Säurelösung im wesentlichen vollständig durch die grünen Kaffeebohnen absorbiert ist.

9. Verfahren nach einem der Ansprüche 1 bis 7, worin der Halteschritt das Zirkulieren der wäßrigen Säurelösung über die grünen Kaffeebohnen umfaßt, bis die Säurekonzentration in den Bohnen im wesentlichen die gleiche wie die in der Lösung ist.

10. Verfahren nach einem der vorhergehenden Ansprüche, worin die Inkontaktbring- und Halteschritte zwischen Raumtemperatur und 80°C durchgeführt werden.

11. Verfahren nach einem der vorhergehenden Ansprüche, worin die grünen Kaffeebohnen weiterhin zu einem Kaffee-Endprodukt verarbeitet werden, und das Kaffee-Endprodukt geeignet ist, um ein Kaffeegetränk zu erzeugen, das einen annehmbaren sauren Charakter für sein Aroma aufweist.

12. Verfahren nach einem der vorhergehenden Ansprüche, worin die grünen Kaffeebohnen danach einem Röstschritt unterzogen werden.

13. Verfahren nach Anspruch 12, worin die gerösteten Kaffeebohnen danach zu einem Kaffee-Endprodukt verarbeitet werden.

14. Verfahren nach einem der vorhergehenden Ansprüche, worin die Schritte Inkontaktbringen mit der wäßrigen Lösung und Inkontaktbringen mit Dampf gleichzeitig durchgeführt werden.

15. Verfahren nach Anspruch 14, worin die Inkontaktbringschritte durchgeführt werden durch Einbringen der grünen Kaffeebohnen in ein Gefäß, Einführen von Dampf in das Gefäß durch einen Einlaß im Bereich des Bodens des Gefäßes und Inkontaktbringen der grünen Kaffeebohnen mit einem Spray der wäßrigen Säurelösung aus einem Sprühkopf im Bereich der Oberseite des Gefäßes.

16. Verfahren nach einem der vorhergehenden Ansprüche, worin das superkritische Kohlendioxid ein Gemisch aus Kohlendioxid und Wasser umfaßt.

17. Verfahren nach einem der vorhergehenden Ansprüche, worin das superkritische Kohlendioxid einen Druck von mehr als 200 bar aufweist.

18. Verfahren nach Anspruch 17, worin das superkritische Kohlendioxid einen Druck von mehr als 240 bar aufweist.

19. Verfahren nach Anspruch 18, worin das superkritische Kohlendioxid einen Druck zwischen 250 bar und 310 bar aufweist.

20. Verfahren nach einem der vorhergehenden Ansprüche, worin das superkritische Kohlendioxid eine Temperatur zwischen 60°C und 120°C aufweist.

21. Verfahren nach Anspruch 20, worin das superkritische Kohlendioxid eine Temperatur zwischen 70°C und 110°C aufweist.

22. Verfahren nach einem der vorhergehenden Ansprüche, worin der Extraktionsschritt ausgeführt wird bei einem Gewichtsverhältnis von superkritischem Kohlendioxid zu grünen Kaffeebohnen zwischen 50/1 und 300/1.

23. Verfahren nach Anspruch 22, worin das Gewichtsverhältnis zwischen 75/1 und 275/1 liegt.

## Revendications

1. Procédé de traitement de grains de café vert, comprenant les étapes consistant à amener les grains de café vert au contact d'une solution aqueuse d'acides organiques qui sont normalement présents dans les grains de café et ensuite, décaféiner lesdits grains de café vert par extraction avec du dioxyde de carbone supercritique, caractérisé en ce que, préalablement à la décaféination, on amène les grains de café vert au contact de vapeur et d'un acide choisi parmi l'acide tartrique, l'acide citrique et l'acide malique, on maintient les grains de café vert au contact de ladite solution aqueuse jusqu'à ce qu'un degré prédéterminé d'acidification desdits grains de café vert apparaisse, par absorption de ladite solution aqueuse par lesdits grains de café vert, ledit degré prédéterminé d'acidification étant le degré obtenu par mise en contact desdits grains de café vert avec une solution aqueuse d'acide citrique avec un rapport en poids des grains de café vert à la solution d'acide citrique de 3/1, et on permet à ladite solution d'acide citrique d'être complètement absorbée par lesdits grains de café vert, ladite solution d'acide citrique ayant une concentration d'acide citrique comprise entre 0,5 % et 3,5 % en poids.

2. Procédé selon la revendication 1, dans lequel ledit acide organique est l'acide citrique.

3. Procédé selon la revendication 1 ou la revendication 2, dans lequel ledit degré prédéterminé d'acidification est celui qu'on obtient quand ladite solution d'acide citrique a une concentration d'acide citrique comprise entre 1,0 % et 3,0 % en poids.

4. Procédé selon la revendication 3, dans lequel ledit degré prédéterminé d'acidification est celui qu'on obtient quand ladite solution d'acide citrique a une concentration d'acide citrique comprise entre 1,5 % et 2,0 % en poids.

5. Procédé selon l'une quelconque des revendications précédentes, dans lequel lesdits grains de café vert sont maintenus au contact de ladite solution aqueuse d'acide jusqu'à ce que la teneur en humidité desdits grains de café vert soit supérieure à 20 % en poids.

6. Procédé selon la revendication 5, dans lequel lesdits grains de café vert sont maintenus au contact de ladite solution aqueuse d'acide jusqu'à ce que la teneur en humidité desdits grains de café vert soit comprise entre 25 % et 50 % en poids.

7. Procédé selon la revendication 6, dans lequel lesdits grains de café vert sont maintenus au contact de ladite solution aqueuse jusqu'à ce que la teneur en humidité desdits grains de café vert soit comprise entre 30 % et 35 % en poids.

8. Procédé selon l'une quelconque des revendications précédentes, dans lequel ladite étape de maintien comprend la mise en circulation de ladite solution aqueuse d'acide sur lesdits grains de café vert jusqu'à ce que ladite solution aqueuse d'acide soit presque complètement absorbée par lesdits grains de café vert.

9. Procédé selon l'une quelconque des revendications 1 à 7, dans lequel ladite étape de maintien comprend la mise en circulation de ladite solution aqueuse d'acide sur lesdits grains de café vert jusqu'à ce que la concentration d'acide dans lesdits grains soit essentiellement la même que celle de la solution.

10. Procédé selon l'une quelconque des revendications précédentes, dans lequel on effectue lesdites étapes de mise en contact et de maintien à des températures comprises entre la température ambiante et 80°C.

11. Procédé selon l'une quelconque des revendications précédentes, dans lequel on traite lesdits grains de café vert de manière complémentaire pour obtenir le produit café final et on adapte ledit produit café final pour produire une boisson à base de café ayant un caractère acide acceptable pour son goût.

12. Procédé selon l'une quelconque des revendications précédentes, dans lequel lesdits grains de café vert sont soumis ensuite à une étape de torréfaction.

13. Procédé selon la revendication 12, dans lequel on traite ensuite lesdits grains de café torréfiés pour obtenir le produit café final.

14. Procédé selon l'une quelconque des revendications précédentes, dans lequel lesdites étapes de mise en contact avec ladite solution aqueuse et de mise en contact avec de la vapeur sont effectuées simultanément.

15. Procédé selon la revendication 14, dans lequel on effectue lesdites étapes de mise en contact en plaçant lesdits grains de café vert dans un récipient, introduisant de la vapeur dans ledit récipient par une entrée adjacente au fond dudit récipient, et amenant lesdits grains de café vert au contact d'une solution aqueuse d'acide pulvérisée à partir d'une tête de pulvérisation adjacente au sommet dudit récipient.

16. Procédé selon l'une quelconque des revendications précédentes, dans lequel ledit dioxyde de carbone supercritique est constitué d'un mélange de dioxyde de carbone et d'eau.

17. Procédé selon l'une quelconque des revendications précédentes, dans lequel ledit dioxyde de carbone supercritique a une pression supérieure à 200 bars.

18. Procédé selon la revendication 17, dans lequel ledit dioxyde de carbone supercritique a une pression supérieure à 240 bars.

19. Procédé selon la revendication 18, dans lequel ledit dioxyde de carbone supercritique a une pression comprise entre 250 bars et 310 bars.

20. Procédé selon l'une quelconque des revendications précédentes, dans lequel ledit dioxyde de carbone supercritique a une température comprise entre 60°C et 120°C.

21. Procédé selon la revendication 20, dans lequel ledit dioxyde de carbone supercritique a une température comprise entre 70°C et 110°C.

22. Procédé selon l'une quelconque des revendications précédentes, dans lequel on effectue ladite étape d'extraction avec un rapport en poids dudit dioxyde de carbone supercritique auxdits grains de café vert compris entre 50/1 et 300/1.

23. Procédé selon la revendication 22, dans lequel ledit rapport en poids est compris entre 75/1 et 275/1.
